Europäisches Patentamt

(19) European Patent Office

Office européen des brevets

(11) Publication number: **0 241 995**
**B1**

(12) EUROPEAN PATENT SPECIFICATION

(45) Date of publication of the patent specification:
29.08.90

(51) Int. Cl.⁵: **B01D 67/00**

(21) Application number: 87200659.8

(22) Date of filing: 07.04.87

(54) Method for preparing a composite semi-permeable membrane.

(30) Priority: 07.04.86 BE 2060959

(43) Date of publication of application:
21.10.87 Bulletin 87/43

(45) Publication of the grant of the patent:
29.08.90 Bulletin 90/35

(84) Designated Contracting States:
AT BE CH DE ES FR GB GR IT LI LU NL SE

(56) References cited:
EP-A- 0 077 509
BE-A- 874 961
DE-A- 2 155 780
FR-A- 2 099 286
US-A- 4 188 418

DESALINATION, vol. 18, 1976, pages 203-214, Elsevier Scientific Publishing Co., Amsterdam, NL; I. GOOSSENS et al.: "The influence of mineral fillers on the membrane properties of high flux asymmetric cellulose acetate reverse osmosis membranes"
PATENT ABSTRACTS OF JAPAN, vol. 9, no. 17 (C-262)[1740], 24th January 1985; & JP-A-59 166 541 (JIYAPAN GOATETSUKUSU K.K.) 19-09-1984
TECHNICAL NOTE SCK/CEN MOL, April 1986;

(73) Proprietor: "Studiecentrum voor Kernenergie", "S.C.K.", Seny Park Charles Lemairestraat 1, B-1160 Brussel(BE)

(72) Inventor: Doyen, Willy Dirk Annemarie, Europawijk 13, B - 2440 Geel(BE)
Inventor: Proost, Rogerius Franciscus Clemens, de Merodelei 275, B - 2300 Turnhout(BE)
Inventor: Leysen, Roger Frans Rosa, Zwanenhof 14, B - 2400 Mol(BE)

(74) Representative: Debrabandere, René et al, BUREAU DE RYCKER Vereenigde Octroolbureaux Belgie N.V. Arenbergstraat 13, B-2000 Antwerpen(BE)

(56) References cited: (continuation)
"Inorganic loaded polysulfone ultrafiltration membranes"

The file contains technical information submitted after the application was filed and not included in this specification

EP 0 241 995 B1

**Description**

The invention pertains to a method for preparing a semi-permeable membrane for ultrafiltration, comprising the steps of:

- preparing a solution of a polymeric binder in a solvent,
- forming a suspension of the obtained solution and zirconium oxide,
- bringing said suspension in the desired shape and
- removing the solvent from the suspension.

Membranes, intended for ultrafiltration are characterized by their so called "cut-off" value. This is the value of the molecular weight of the solute particles that are retained for 90% by the membrane. This value is derived from the retention curve of the membrane.

Such a retention curve is being obtained by retention measurements with different solute molecules with increasing molecular weight. When for a certain solute molecule a retention of 90% is found, the membrane will be assigned a cut-off value, that is equal to the molecular weight of this solute. Depending on the slope of the retention curve the difference can be made between a sharp and a diffuse cut-off.

100% polymeric ultrafiltration membranes have retention curves by which two macromolecules can be separated from each other, if their molecular weight differs at least by a factor of 5 to 10.

One has already attempted to improve the quality of membranes by adding substances to the polymeric binder.

The incorporation of inorganic, organic or metallic substances into polymeric membranes has been studied, quite extensively in the past with the aim to improve the tedious characteristics of 100% polymeric membranes, like a bad resistance towards compaction and a low permeate flux. More recently it was found that a membrane's tendency to irreversible shrinking upon drying was prevented by the addition of inorganic substances.

A method for preparing a semi-permeable membrane of the above mentioned kind is known from DE-A 2 155 780. Although said patent publication describes mainly the preparation of relatively thick membranes by rolling or kneading a dry mixture of a polymeric binder and a filler material, it mentions the possibility of preparing a membrane with a thickness lower than 0,1 mm by dissolving a polymer in a solvent, dispersing a filler material in the solution, pouring a film of the obtained mixture on a porous support and evaporating the solvent. The possibility of using zirconium oxide as filler material is mentioned in general but no examples are given with said filler material.

The percentage of a filler material other than zirconium oxide with respect to the polymer is according to the examples describing the wet way of preparation, this is by preparing a suspension, relatively low.

The invention has for object to provide a method for preparing a membrane with an improved selectivity for ultrafiltration with respect to the membrane obtained according to the above mentioned known method.

For this purpose a membrane with a cut-off value below 50,000 daltons is prepared, the binder solution is prepared by dissolving the polymeric binder in a mixture of low temperature ($\leq$100 degrees Celsius) boiling solvent and a high temperature (> 100 degrees Celsius) boiling solvent, the zirconium oxide is added to the polymeric binder solution into a weight ratio zirconium oxide/polymeric binder of at least 80/20, said polymeric binder being one of the materials of the group polysulfone, polyvinylidene fluoride and polyacrylonitrile, a small amount of a thixotropic stabilizer is added to the suspension, said suspension is ground to deagglomerate the zirconium oxide grains before bringing the suspension in the desired shape, and the low boiling solvent is removed in the end by evaporation and the high boiling solvent is removed by extraction.

Alternately for this purpose a membrane with a cut-off value equal to or higher than 50,000 daltons is prepared and the binder solution is prepared by dissolving the polymeric binder in a high temperature (>100 degrees Celsius) boiling solvent, the zirconium oxide is added to the polymeric binder solution into a weight ratio zirconium oxide/polymeric binder of at least 80/20, said polymeric binder being one of the materials from the group polysulfone, polyvinylidene fluoride and polyacrylonitrile, a small amount of a thixotropic stabilizer is added to the suspension and the suspension is ground to deagglomerate the zirconium oxide grains before bringing the suspension in the desired shape.

Unexpectedly has been discovered that the addition, of zirconium oxide grains into the polymer solution by proceeding according to the above mentioned methods results in a membrane that is very well suited for ultrafiltration.

The method according to the invention results thus in a different way of dispersion of the zirconium oxide in the polymer binder with respect to the above mentioned known method.

It was also found that the sagging stability of a suspension prepared with zirconium oxide grains by the known methods was too low to obtain the desired effect. It is known from literature that the first layer of a membrane that is formed upon quenching in the coagulation bath is the skin-layer. This skin-layer determines the mass-transfer properties of the membrane. To obtain the desired effect the zirconium oxide grains have to be present in this skin-layer. This property is obtained by rendering the suspension more stable and thixotropic by adding a suspension stabilizer.

2

Methods for preparing a membrane with the aim to improve the membrane resistance towards compaction for use in reverse osmosis and/or ultrafiltration are also described in US-A 3 567 666, where particles with uniform interconnected pores are incorporated in a polymeric membrane with channels therein, and in the FR-A 2 099 286 where filler particles are incorporated in the support layer of the dual membrane in a weight ratio filler material/polymeric material between 1/50 and 1/1.

Both methods do not disclose the use of zirconium oxide.

Another method for preparing a membrane is also described in EP-A 0 077 509. In order to prevent the irreversible shrinkage of the membrane in the drying process, 60 to 90 wt% of small particles of a pigment and/or a filler are mixed to the organic binder, the specific surface of the particles lying between 5 and 50 m2/g. The suspension is poured on a porous support structure and the solvent is removed.

Only examples are given of $TiO_2$ as substance added to the binder or of $TiO_2$ with a filler such as Ca-Cl2.

Other fillers or pigments such as soot, iron oxide, aluminium oxide, barium sulphate, zinc oxide and zinc sulfide are mentioned but not zirconium oxide.

In a particular embodiment of the invention the thixotropic stabilizer is added into an amount between 1 and 2 wt% with respect to the solvent.

The most suitable low temperature boiling solvents are amongst dioxane, chloroform and methylene chloride.

The most suitable high temperature boiling solvent is a solvent of the series N-methyl-2-pyrrolidone, dimethyl formamide or dimethyl acetamide.

In an efficient form of execution of the invention the suspension is given the desired form by casting upon a glass-plate, the membrane being removed from the plate, after removing the solvent.

In a remarkable form of the execution the suspension is given the form of a hollow fiber by spinning.

In another remarkable form of embodiment of the invention the suspension is given the shape of a tube by using a casting-bob.

Other features and advantages of the invention will stand out from the following description of a method for preparing a composite membrane for ultrafiltration, and of the membrane thus manufactured according to the invention.

For the preparation of a composite membrane for ultrafiltration, firstly a solution of the polymeric binder, i.e. polysulfone, polyvinylidene fluoride or polyacrylonitrile, in a solvent is prepared. Zirconium oxide grains and a thixotropic suspension stabilizer are added to the solution. The suspension is then brought in the desired shape, either in the shape of a film by casting on a support like a glass-plate or a non-woven type polyester, polyamide or polypropylene support structure, or in the shape of a hollow fiber or hollow tube by means of a spinneret or a casting-bob. Subsequently the suspension is crystallized by removal of the solvent.

Zirconium oxide is added to the polymer solution in a weight ratio zirconium oxide/polymeric binder of at least 80/20 and preferably between 85/15 and 98/2. The diameter of the zirconiumoxide grains is at the most 500 μm.

A sufficient amount of a thixotropic suspension stabiliser has to be added (normally 1 to 2 wt % with respect to the solvent). Hereby the viscosity of the suspension is raised by a factor of 2 to 10 to prevent sagging.

Before bringing the suspension in the desired shape, the suspension is milled in order to deagglomerate the zirconium oxide grains.

When a semi-permeable membrane with a cut-off value below 50,000 daltons is wanted,the polymeric binder solution is prepared by dissolving the binder in a mixture of a low temperature ($\leq$ 100°C) boiling solvent of the group formed by dioxane, chloroform and methylene chloride, and a high temperature (> 100°C) boiling solvent of the group formed by N-methyl-2-pyrrolidone,dimethylformamide and dimethylacetamide.

For removing the solvent from the suspension, the low boiling solvent is first removed by evaporation whereas the high boiling solvent is removed by extraction.

When a semi-permeable membrane with a cut-off value equal to or higher than 50,000 daltons has to be prepared, exclusively the above mentioned high boiling solvent is used to dissolve the polymeric binder.

According to the above described method a membrane is obtained, that has a sharper cut-off in comparison with the existing membranes. Moreover, this membrane is applicable in a large pH-domain, which is an advantage for cleaning in acid as well as in alkaline media, and is thermally stable up to 125°C. Especially when the solvent is removed from the suspension, by quenching the membrane into a waterbath, the diameter of the pores in the skin-layer can be better controlled by the presence of the zirconium oxide grains.

The invention will be illustrated by means of the following examples :

Example 1

1. To prepare a membrane for ultrafiltration with a cut-off value of 150,000 daltons, 180 grams of polysulfone -(type P 1800 NT 11, supplied by Union Carbide) are dissolved in 820 grams of N-methyl-2-pyrrolidone at 50°C. To this solution, 270 grams of zirconium oxide (type E 10, supplied by Magnesium Electron Ltd) are added. Subsequently 8.2 grams Cab-O-Sil M-5 (supplied by Cabot Inc.) are added. This mixture is wet milled in a suspension mill at room temperature in order to obtain the suspension. The suspension is cast onto a glass-plate into a film with a wet thickness of 200 μm. Subsequently this glass-plate is quenched in a waterbath at room temperature.

The composite membrane crystallizes and comes from the glass-plate after a few minutes. After a residence time of at least one hour in the waterbath, the membrane is boiled during one hour in a solution containing 30 wt % of glycerine and 70 wt % of water. Finally the membrane is dried in an oven at 40°C.

By this method which is not according to the invention a membrane consisting of 60 wt % of zirconiumoxide and 40 wt % of polysulfone is obtained, having a dry thickness of 100 μm and a cut-off value of 150,000 daltons for dextran molecules.

2. To prepare a second membrane with a similar cut-off value,144 grams of polysulfone (P 1800 NT 11) are dissolved in 656 grams of N-methyl-2-pyrrolidone at 50°C. To this solution 576 grams of zirconium oxide type E 10 are added. Subsequently 6.56 grams of Cab-O-Sil M-5 are added to this mixture. By proceeding in the same way as specified in example 1.1,a membrane is obtained, consisting of 80 wt % of zirconiumoxide and 20 wt % of polysulfone, having a dry thickness of 110 μm and a cut-off value of 150,000 daltons for dextran molecules.

3. To prepare a third membrane with a similar cut-off value,90 grams of the same type of polysulfone are dissolved in 410 grams of N-methyl 2-pyrrolidone at 50°C. To this solution 810 grams of the same type of zirconiumoxide is added. To this mixture 4.1 grams of Cab-O-Sil M-5 are added.By proceeding in the same way as specified in example 1.1 a membrane is obtained, consisting of 90 wt % of zirconium oxide and 10 wt % of polysulfone, having a dry thickness of 145 μm and a cut-off value of 150,000 daltons for dextran molecules.

The membranes obtained by the above mentioned procedures have a similar cut-off value, although their retention curves have not the same shape. In table 1 the retention values for different solutes (dextran 9,000, 40,000, 74,300 and 150,000) for the three types of membranes are given. The concentration of the solutions was 1,000 ppm.The measurements were carried out in a cross-flow cell with a total geometric membrane area of 336 cm2, at a transmembrane pressure of 4.7 bars and a temperature of 35°C.

Table 1

| Membrane preparation method Example No. | Composition: weight ratio $ZrO_2$/polysulfone | Retention value (%) for dextran molecules with a molecular weight of | | | |
|---|---|---|---|---|---|
| | | 9,000 | 40,000 | 74,300 | 150,000 |
| 1.1 (comparative) | 60/40 | 18 | 38 | 66 | 80 |
| 1.2 | 80/20 | – | 7 | 74 | 89 |
| 1.3 | 90/10 | 5 | 8 | 87 | 94 |

It is clear from this table that the membranes with a content of respectively 80 and 90 wt % of zirconium oxide have the steepest retention curves and subsequently the sharpest cut-off. With these membranes, it becomes possible to separate two macromolecules from each other,having a molecular weight that differs only by a factor of 2, i.e. the retention for the dextran 40,000 is resp. 7 % and 8 % and for the dextran 74,300 equals 74 % respectively 87 % for the membrane with a zirconium oxide content of 80 respectively 90 wt %. The membrane according to 1.1. which is not according to the invention has clearly a less sharper cut-off value.

Example 2

For the preparation of a membrane with a cut-off value of 1,500 daltons 80 grams of polysulfone (type P1800 NT 11) are dissolved in a mixture of 120 grams of N-methyl-2-pyrrolidone and 1,000 grams of chloroform at 45°C under refluxing. After cooling to room temperature 320 grams of zirconiumoxide (type E10) are added to this mixture. Subsequently 22.4 grams of Cab-O-Sil M-5 are added.This mixture is wet milled during 48 hours in a suspension mill at room temperature. Subsequently the suspension is cast, with a wet thickness of 350 μm on a non-woven type support structure (suppied by Carl Freudenberg) with a thickness of 200 μm. The whole structure is quenched in a waterbath at 5 degrees Celsius and kept submerged for at least one hour, subsequently submerged in a bath containing a boiling mixture of 30wt % of glycerine and 70wt % of water. Finally the membrane is dried in an oven at 40 degrees Celsius. The so obtained composite membrane has a thickness of 270 μm and a cutt-off value of 1, 500 daltons for dextran molecules.

Example 3.

For preparing a hollow fiber module with a total geometric membrane area of 215 cm² for ultrafiltration, a suspension is prepared as described in example 1.2.

However, the suspension is not cast upon a glass-plate or a support structure, but is extruded by means of a spinneret of the "tube in orifice" design, from which the orifice has a diameter of 1.7 mm and the tube an inner/outer diameter of respectively 0.4/0.7 mm. The air gap, that is to say the distance between the spinneret orifice and the coagulation bath, is 10 cm, whereas the operating pressure was 0.4 bars for both the suspension and the inner coagulation medium (here water). The nascent hollow fiber is led into the coagulation bath containing 90 wt% of water and 10 wt% of N methyl-2 pyrrolidone. By this method a hollow fiber is obtained with an inner diameter of 1.1 mm and a dry thickness of 0.2 mm. This hollow fiber is treated in the glycerine bath for one hour.

After drying at room temperature the hollow fiber is cut into equal pieces of 25 cm. A bundle of 40 of such pieces is put into a tube with an internal diameter of 19 mm. At both ends this tube is potted wit an epoxy resin.

Subsequently the two ends are cut from the tube to obtain a hollow fiber module with a geometric membrane area of 215 cm² and a cut-off value of 250,000 daltons for dextran molecules.

The membrane should not necessarily be given one of the above-described shapes. Instead of casting on a support or shaping into a hollow fiber by spinning, the membrane may be rolled-up to from a spiral wound module (Swiss-roll), or the membrane may be manufactured by extruding the suspension in the shape of a hollow tube (tube-like membrane).

## Claims

1. Method for preparing a composite semi-permeable membrane for ultrafiltration, comprising the steps of:
   – preparing a solution of a polymeric binder in a solvent,
   – forming a suspension of the obtained solution and zirconium oxide,
   – bringing said suspension in the desired shape and
   – removing the solvent from the suspension,
   characterized in that i) a membrane with a cut-off value below 50.000 daltons is prepared by dissolving the polymeric binder in a mixture of low temperature ≤ 100 degrees Celsius) boiling solvent and a high temperature (> 100 degrees Celsius) boiling solvent, zirconium oxide being added to the binder solution into a weight ratio zirconium oxide polymeric binder of at least 80/20, said polymeric binder being one of the materials from the group polysulfone, polyvinylidene fluoride and polyacrylonitrile; ii) a small amount of a thioxotropic stabilizer is added to the suspension; iii) the suspension is ground to deagglomerate the zirconium oxide grains before bringing the suspension in the desired shape; and iv) the low boiling solvent is removed in the end by evaportaion and the high boiling solvent is removed by extraction.

2. Method as defined in claim 1, characterized in that as solvent which boils at low temperature, use is made of a solvent from the group formed by dioxane, chloroform and methylene chloride.

3. Method for preparing a composite semi-permeable membrane for ultrafiltration comprising the steps of:
   – preparing a solution of a polymeric binder in a solvent,
   – forming a suspension of the obtained solution and zirconium oxide,.
   – bringing said suspension in the desired shape and
   – removing the solvent from the suspension,.
   characterized in that i) a membrane with a cut-off value equal to or higher than 50,000 daltons is prepared and the binder solution is prepared by dissolving the polymeric binder in a high temperature (> 100 degrees Celsius) boiling solvent, zirconium oxide being added to the polymeric binder solution into a weight ratio zirconium oxide/polymeric binder of at least 80/20, said polymeric binder being one of the materials from the group polysulfone, polyvinylidene fluoride and polyacrylonitrile; ii) a small amount of a thixotropic stabilizer is added to the suspension; and iii) the suspension is ground to deagglomerate the zirconium oxide grains before bringing the suspension in the desired shape.

4. Method as defined in any one of claims 1 to 3, characterized in that as high temperature boiling solvent use is made of a solvent from the group formed by: N-methyl-2-pyrrolidone, dimethyl formamide and dimethyl acetamide.

5. Method as defined in any one of claims 1 to 4, characterized in that the thixotropic stabilizer is added into an amount between 1 and 2 wt% with respect to the solvent.

6. Method as defined in any one of claims 1 to 5 characterized in that for preparing the suspension zirconium oxide with a grain size of 500 μm at the most is used.

7. Method as defined in any one of claims 1 to 6, characterized in that the suspension is brought to the required shape by casting upon a plate, the membrane being removed from the plate after removing the solvent.

8. Method as defined in any one of claims 1 to 6, characterized in that the suspension is brought in the shape of a hollow fiber by spinning.

9. Method as defined in any one of claims 1 to 6 characterized in that the suspension is brought to the shape of a hollow tube by means of a casting-bob.

10. Method as defined in any one of claims 1 to 9, characterised in that the membrane is rolled into a spiral-wound module.

## Revendications

1. Procédé pour la préparation d'un diaphragme composite semi-perméable destiné à l'ultrafiltration, ce procédé comprenant les étapes consistant à:
   - préparer une solution d'un agent liant polymère dans un solvant,
   - former une suspension à partir de la solution obtenue et d'oxyde de zirconium,
   - amener cette suspension à la configuration désirée et
   - éliminer le solvant hors de la suspension.

   caractérisé en ce que i) on prépare un diaphragme ayant une valeur d'élimination inférieure à 50.000 daltons en dissolvant l'agent liant polymère dans un mélange constitué d'un solvant à basse température d'ébullition (≤ 100 degrés Celsius) et d'un solvant à haute température d'ébullition (> 100 degrés Celsius), l'oxyde de zirconium étant ajouté à la solution de l'agent liant dans un rapport pondéral oxyde de zirconium/agent liant polymère d'au moins 80/20, l'agent liant polymère étant une des matières choisie parmi le groupe comprenant les polysulfones, le fluorure de polyvinylidène et le polyacrylonitrile; ii) à la suspension on ajoute une petite quantité d'un agent stabilisant thixotrope; iii) on broie la suspension en vue de désintégrer les grains d'oxyde de zirconium avant d'amener la suspension à la configuration désirée; et iv) finalement, par évaporation, on élimine le solvant à bas point d'ébullition et le solvant à haut point d'ébullition, par extraction.

2. Procédé selon la revendication 1, caractérisé en ce que, comme solvant à basse température d'ébullition, on fait appel à un solvant choisi parmi le groupe comprenant le dioxanne, le chloroforme et le chlorure de méthylène.

3. Procédé pour la préparation d'un diaphragme composite semi-perméable destiné à l'ultrafiltration, ce procédé comprenant les étapes consistant à:
   - préparer une solution d'un agent liant polymère dans un solvant,
   - former une suspension à partir de la solution obtenue et d'oxyde de zirconium,
   - amener cette suspension à ia configuration désirée et
   - éliminer le solvant hors de la suspension.

   caractérisé en ce que i) on prépare un diaphragme ayant une valeur d'élimination égale à ou supérieure à 50.000 daltons et on prépare la solution d'agent liant en dissolvant l'agent liant polymère dans un solvant à haute température d'ébullition (> 100 degrés Celsius), l'oxyde de zirconium étant ajouté à la solution de l'agent liant polymère selon un rapport pondéral oxyde de zirconium/agent liant polymère d'au moins 80/20, l'agent polymère étant une des matières choisie parmi le groupe comprenant les polysulfones, le fluorure de polyvinylidène et le polyacrylonitrile; ii) à la suspension on ajoute une petite quantité d'un agent stabilisant thixotrope; et iii) on broie la suspension en vue de désintégrer les grains d'oxyde de zirconium avant d'amener la suspension à la configuration désirée.

4. Procédé selon l'une quelconque des revendications 1 à 3, caractérisé en ce que, comme solvant à haute température d'ébullition, on fait appel à un solvant choisie parmi le groupe comprenant la N-méthyl-2–pyrrolidone, le diméthylformamide et le diméthylacétamide.

5. Procédé selon l'une quelconque des revendications 1 à 4, caractérisé en ce qu'on ajoute le stabilisant thixotrope en une quantité comprise entre 1 et 2% en poids par rapport au solvant.

6. Procédé selon l'une quelconque des revendications 1 à 5, caractérisé en ce que, pour préparer la suspension, on utilise de l'oxyde de zirconium ayant une granularité de 500 μm au plus.

7. Procédé selon l'une quelconque des revendications 1 à 6, caractérisé en ce qu'on amène la suspension à la configuratoin requise, par moulage sur une plaque, le diaphragme étant retiré de la plaque après élimination du solvant.

8. Procédé selon l'une quelconque des revendications 1 à 6, caractérisé en ce qu'on amène la suspension sous forme d'une fibre creuse, par filage.

9. Procédé selon l'une quelconque des revendications 1 à 6, caractérisé en ce qu'on amène la suspension sous forme d'un tube creux, au moyen d'un disque de moulage.

10. Procédé selon l'une quelconque des revendications 1 à 9, caractérisé en ce qu'on enroule le diaphragme en un module enroulé en spirale.

## Patentansprüche

1. Ein Verfahren zur Herstellung einer halbdurchlässigen Schichtmembran für die Ultrafiltrierung, bestehend aus folgenden Schritten:

– Vorbereitung einer Lösung aus einem Polymerbinder in einem Lösemittel,
– Bildung einer Suspension der erhaltenen Lösung und Zirkoniumoxid,
– Formgebung dieser Suspension wie gewünscht und
– Entfernen des Lösemittels aus der Suspension,
gekennzeichnet dadurch, daß i) eine Membran mit einem Cut-off-Wert unter 50.000 Dalton hergestellt wird, indem man das polymere Bindemittel in einer Mixtur aus niedrigsiedendem Lösemittel (≤ 100 Grad Celsius) und hochsiedendem Lösemittel (> 100 Grad Celsius) auflöst, das Zirkoniumoxid in einem Gewichtsverhältnis Zirkoniumoxid/Polymerbinder von mindestens 80/20 beimischt, wobei dieser Polymerbinder ein Stoff aus der Gruppe der Polysulfone, Polyvinylfluoride oder der Polyacrylnitrile ist; ii) eine kleine Menge eines thixotropen Stabilisators der Suspension beigemengt wird; iii) die Suspension gemahlen wird, um die Zirkoniumoxidkörner zu deagglomerieren, bevor die Suspension in die gewünschte Form gebracht wird; und iv) am Ende das niedrigsiedende Lösemittel durch Verdunstung und das hochsiedende Lösemittel durch Extraktion entfernt.

2. Das Verfahren gemäß Anspruch 1, gekennzeichnet dadurch, daß für das niedrigsiedende Lösemittel ein Lösemittel aus der Gruppe, gebildet von Dioxan, Chloroform und Methylchlorid, verwendet wird.

3. Ein Verfahren zur Herstellung einer halbdurchlässigen Schichtmembran für die Ultrafiltrierung, bestehend aus folgenden Schritten:
– Vorbereitung einer Lösung aus einem Polymerbinder in einem Lösemittel,
– Bildung einer Suspension der erhaltenen Lösung und Zirkoniumoxid,
– Formgebung dieser Suspension wie gewünscht und
– Entfernen des Lösemittels aus der Suspension,
gekennzeichnet dadurch, daß i) eine Membran mit einem Cut-off-Wert von größer oder gleich 50.000 Dalton hergestellt wird und die Bindemittellösung angesetzt wird, indem man das polymere Bindemittel in einer hochsiedenden (> 100 Grad Celsius) auflöst, das Zirkoniumoxid der polymeren Bindemittellösung in einem Gewichtsverhältnis Zirkoniumoxid/polymeres Bindemittel von mindestens 80/20 beimischt, wobei dieses polymere Bindemittel ein Stoff der Gruppe Polysulfon, Polyvinylfluorid oder Polyacrylnitril ist; ii) eine kleine Menge eines thixotropen Stabilisators der Suspension beigemengt wird; und iii) die Suspension gemahlen wird, um das Zirkoniumoxid zu deaglommerieren, bevor die Suspension in die gewünschte Form gebracht wird.

4. Das Verfahren gemäß einem der Ansprüche 1 bis 3, gekennzeichnet dadurch, daß für das hochsiedende Lösemittel ein Lösemittel der Gruppe, gebildet von: N-Methyl-2-Pyrrolidon, Dimethylformamid und Dimethylacetamin, verwendet wird.

5. Das Verfahren gemäß einem der Ansprüche 1 bis 4, gekennzeichnet dadurch, daß der thixotrope Stabilisator in einer Menge zwischen 1 und 2 wt% in bezug auf das Lösemittel beigegeben wird.

6. Das Verfahren gemäß einem der Ansprüche 1 bis 5, gekennzeichnet dadurch, daß zur Bereitung der Suspension Zirkoniumoxid mit einer Korngröße von höchstens 500 μm verwendet wird.

7. Das Verfahren gemäß einem der Ansprüche 1 bis 6, gekennzeichnet dadurch, daß die Suspension in die gewünschte Form gebracht wird, indem man sie auf eine Platte gießt und die Membran nach dem Entfernen des Lösemittels von der Platte abgenommen wird.

8. Das Verfahren gemäß einem der Ansprüche 1 bis 6, gekennzeichnet dadurch, daß die Suspension durch Spinnen die Form einer Hohlfaser erhält.

9. Das Verfahren gemäß einem der Ansprüche 1 bis 6, gekennzeichnet dadurch, daß die Suspension mit Hilfe eines Gußkörpers die Form eine Hohlröhre erhält.

10. Das Verfahren gemäß einem der Ansprüche 1 bis 9, gekennzeichnet dadurch, daß die Membran zu einem spiralförmig gewundenen Modul aufgerollt wird.